# EUROPÄISCHE PATENTSCHRIFT

(11) **EP 0 731 746 B1**
(45) Veröffentlichungstag und Bekanntmachung des Hinweises auf die Patenterteilung: **21.05.1997**
(21) Anmeldenummer: 95902094.2
(22) Anmeldetag: 30.11.1994
(51) Int. Cl.: B29C 45/17, B22D 17/22

(54) **HANDHABUNGSSYSTEM FÜR GIESSFORMEN**
SYSTEM FOR HANDLING CASTING MOLDS
SYSTEME DE MANIEMENT DE MOULES

(30) Priorität: 30.11.1993 DE 4340661
(43) Veröffentlichungstag der Anmeldung: 18.09.1996
(73) Patentinhaber: Spiess, Armin, CH-9014 St. Gallen (CH)
(72) Erfinder: Spiess, Armin, CH-9014 St. Gallen (CH)
(74) Vertreter: Behrendt, Arne, Dipl.-Ing.
(86) Internationale Anmeldenummer: EP9403966
(87) Internationale Veröffentlichungsnummer: WO9515247

(56) Entgegenhaltungen:
- EP-A- 0 287 203
- DE-A- 3 151 859
- GB-A- 2 189 182
- US-A- 3 103 705
- PATENT ABSTRACTS OF JAPAN vol. 14, no. 157 (M-0955) 27. März 1990 & JP,A,02 020 314 (TOYO MACH & METAL CO LTD) 23. Januar 1990
- PATENT ABSTRACTS OF JAPAN vol. 9, no. 46 (M-360) (1769) 27. Februar 1983 & JP,A,59 185 560 (TAMAGAWA DAIKASUTO K.K.) 22. Oktober 1984

## Beschreibung

Die Erfindung betrifft ein Handhabungssystem für die Handhabung von Gießformen bei der Herstellung der Formhohlräume und beim Gießen, insbesondere für den Spritz- oder Druckguß, bestehend aus mindestens einer Bearbeitungsstation mit einer Aufspannvorrichtung für die Gießform im Arbeitsbereich eines Bearbeitungswerkzeuges und mindestens einer Gießvorrichtung, wobei die Gießform zwei gegeneinander bewegliche Formhälften aufweist, die in der Gießvorrichtung senkrecht zur Trennfläche der Gießformen aneinander geführt sind, wobei einer Formhälfte ein Auswerferpaket zugeordnet ist, welches relativ zu dieser Formhälfte beweglich ist und an dieser Formhälfte geführt ist, und wobei die Formhälften auswechselbar, bei geschlossener Form aneinander anliegende und den Formhohlraum umschließende Kassetten aufweisen, die an ihren der Trennfläche abgewandten Seiten mit Stützflächen und Zwangsführungen versehen sind, die in entsprechende Zwangsführungen der Formhälften einschiebbar sind.

Nach dem Stande der Technik ist es üblich, die Formhohlräume von Gießformen für den Spritz- oder Druckguß an Bearbeitungsstationen herzustellen, die sich in der Formenabteilung der Gießerei oder bei einer Spezialfirma für den Formenbau befinden. Die Bearbeitungsstationen sind mit geeigneten Bohr-, Dreh-, Fräs-, Schleif- und Erodiereinrichtungen versehen, mit denen die Formhohlräume hergestellt und die Oberflächen der Formhohlräume bearbeitet werden. Für das Aufspannen der Gießformen an den Bearbeitungsstationen des Formenbaus sind die Bearbeitungsstationen mit den üblichen Spannmitteln versehen. Mit Hilfe dieser Spannmittel müssen die Kassetten jeweils in der für die Bearbeitung erforderlichen Lage eingespannt werden. Für das richtige und maßgenaue Einspannen ist es zwar bereits hilfreich, wenn die Formhohlräume sich in gleichförmig ausgebildeten Kassetten befinden. Dennoch ist auch beim lagerichtigen Einspannen dieser Kassetten das handwerkliche Geschick des Formenbauers in hohem Maße gefordert. Besonders zeitraubend sind diese Anpassungsarbeiten, wenn bei besonders komplizierten Gußstücken der Formhohlraum nach entsprechenden Probegüssen nachbearbeitet werden muß, was in vielen Fällen mehrfach notwendig ist. Wenn die Kassetten fehlerhaft in der Bearbeitungsstation eingespannt werden, kommt es unter Umständen zu nicht reparablen Fehlbearbeitungen.

Es ist deshalb Aufgabe der Erfindung, ein Handhabungssystem für die Handhabung von Gießformen zu schaffen, durch welches die Arbeitsvorgänge einerseits bei der Herstellung und Nachbearbeitung der Formhohlräume und andererseits beim Zusammenbau und Gebrauch der Gießformen vereinfacht werden.

Zur Lösung dieser Aufgabe schlägt die Erfindung ausgehend vom Handhabungssystem der eingangs genannten Art vor, daß die Aufspannvorrichtung der Bearbeitungsstation Kassettenaufnahmen mit Zwangsführungen aufweisen, die mit den Zwangsführungen der Kassetten korrespondieren.

Beim Handhabungssystem gemäß der Erfindung haben die auswechselbaren Kassetten, die die individuell ausgestalteten Formhohlräume enthalten, an ihren den Trennflächen abgewandten Seiten Stützflächen und Zwangsführungen, die in ihren Abmessungen den Kassettenaufnahmen entsprechen, die sich einerseits in der Gießvorrichtung und andererseits an der Bearbeitungsstation befinden. Hierdurch ist es möglich, die Kassetten außerordentlich schnell und ohne jeden Montage- und Anpassungsaufwand entweder in die Kassettenaufnahme der Gießvorrichtung oder in die entsprechende Kassettenaufnahme an der Bearbeitungsstation einzuschieben. Hierdurch wird der Arbeitsaufwand bei der Herstellung und der gegebenenfalls erforderlichen Nachbearbeitung der Formhohlräume außerordentlich gering.

Die Kassetten sind zweckmäßig in der Kassettenaufnahme der Bearbeitungsstation durch entsprechend ausgebildete Adapter in unterschiedlichen Lagen in Bezug auf die Bearbeitungsstation fixierbar. Hierdurch soll es ermöglicht werden, die erforderlichen Bearbeitungen gegebenenfalls in unterschiedlichen, vorab festgelegten Richtungen durchführen zu können, beispielsweise horizontal, vertikal oder schräg geneigt.

Bei der Bearbeitung der Formhohlräume ist es natürlich wichtig, die Kassette in Bezug auf den Bearbeitungstisch der Bearbeitungsstation genau reproduzierbar zu zentrieren. Zu diesem Zweck ist vorgesehen, daß die Kassettenaufnahme der Bearbeitungsstation mit einer Zentrier- und Spannhilfe versehen ist, durch welche die Kassetten oder die Adapter in Bezug auf den Bearbeitungstisch der Bearbeitungsstation zentrierbar sind.

Diese Zentrier- und Spannhilfen bestehen zweckmäßig aus beweglichen Klauen oder Leisten, die in V-förmige Ausnehmungen in den Stützflächen der Kassetten oder Adapter einschiebbar sind, wobei die Klauen oder Leisten durch einen gemeinsamen Antrieb synchron in die V-förmigen Ausnehmungen der Kassetten oder Adapter einpreßbar sind. Die Klauen oder Leisten in Verbindung mit der besonderen Form der Ausnehmungen ermöglichen eine genaue reproduzierbare, formschlüssige und in der Höhe genau definierte Einspannung der zu bearbeitenden Kassette.

Der gemeinsame Antrieb für die beweglichen Klauen oder Leisten der Zentrier- und Spannhilfe ist zweckmäßig als Hebelgetriebe ausgebildet. Ein solches Hebelgetriebe kann ohne weiteres so ausgebildet werden, daß es den Klauen und Leisten entlang einem vorgegebenen Führungsweg eine exakte Zwangsführung gibt.

Das Handhabungssystem gemäß der Erfindung wird sinnvoll durch eine Reihe von Maßnahmen ergänzt, die den Ein- und Ausbau der Kassetten in Bezug auf die Gießvorrichtung beschleunigen. Diese Maßnahmen sind allerdings nicht nur im Zusammenhang mit den Handhabungssystem gemäß der Erfindung von Vorteil, sondern können ganz allgemein bei Gießvorrichtungen der eingangs genannten Art mit Wechselkassetten angewendet werden.

Ein besonderes Problem bei Gießvorrichtungen mit Wechselkassetten besteht darin, die Wechselkassetten ohne Störung durch das Auswerferpaket, den Antrieb des Auswerferpaketes oder sonstiger, quer zur Ein- und Ausschieberichtung der Kassetten eingebauter Teile schnell und einfach ein- und ausbauen zu können.

In diesem Zusammenhang schlägt die Erfindung vor, daß die mit dem Auswerferpaket versehene Formhälfte einen Aufnahmeraum für das Auswerferpaket aufweist, welches an Führungssäulen gehalten, geführt und gestützt ist, die an der zugehörigen Kassette befestigt sind und sich durch den Aufnahmeraum erstrecken.

Hierdurch ist das Auswerferpaket ausschließlich an der zugehörigen Kassette gehalten, geführt und gestützt, so daß es zusammen mit dieser Kassette ein- und ausgebaut werden kann. Aufgrund der engen und genauen Führung des Auswerferpaketes an der Kassette mittels der Führungssäulen können sowohl das Auswerferpaket als auch die Kassette in Bezug auf die zugehörigen Formhälften schwimmend gelagert sein, ohne daß es zu Zwängungen zwischen den Auswerfern und der Kassette kommt.

Weiterhin ist vorteilhaft, daß bei dieser Zusammenfassung von Kassette und Auswerferpaket gegebenenfalls die Stirnflächen der Auswerfer zusammen mit dem Formhohlraum in der Bearbeitungsstation bearbeitet werden können, so daß die Stirnflächen der Auswerfer automatisch der übrigen Kontur der Formbegrenzungsflächen folgen.

Zweckmäßig ist weiterhin dem Auswerferpaket eine von einer Zug- und Druckstange betätigte, das Auswerferpaket hinterfassende Krallenplatte zugeordnet, hinter deren Krallen das Auswerferpaket parallel zur zugehörigen Kassette einschiebbar ist. Diese Krallenplatte macht es möglich, auf das Auswerferpaket die zu dessen Zurückziehen erforderlichen Kräfte auszuüben, ohne die Einschiebbarkeit des Auswerferpaketes zusammen mit der Kassette zu beeinträchtigen.

Zweckmäßig ist weiterhin die Krallenplatte bei geschlossener Form bündig in einer passenden Ausnehmung der zugehörigen Aufspannplatte versenkt. Eine derartig versenkbare Krallenplatte macht es möglich, die beim Gießvorgang auf die zugehörige Kassette einwirkenden, sehr großen Kräfte großflächig am Maschinenschild abstützen zu können, so daß unzulässige Durchbiegungen der Kassette zuverlässig vermieden werden.

Um trotz der Krallenplatte genügend Raum für die Anordnung der Führungssäulen für das Auswerferpaket zu haben, ist schließlich vorgesehen, daß die Krallenplatte am Rand im Bereich der Führungssäulen wellenförmige Ausnehmungen aufweist.

Um auch die der anderen Formhälfte zugeordnete Kassette ohne den vorherigen Ausbau von Teilen aus der zugehörigen Kassettenaufnahme herausziehen zu können, ist schließlich noch vorgesehen, daß die Einfüllöffnung der Gießform eine Düse aufweist, die in der Abstützebene zwischen Kassette und Aufspannplatte geteilt ist.

Ein Ausführungsbeispiel der Erfindung wird im folgenden anhand der Zeichnung näher erläutert. Es zeigen:
- Fig. 1: eine Draufsicht auf die Gießvorrichtung, teilweise im Schnitt;

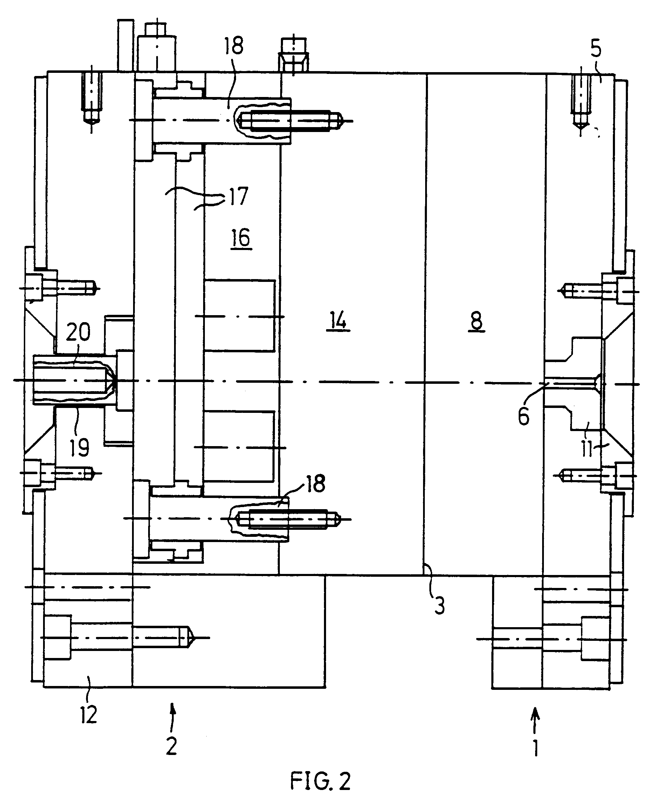

- Fig. 2: eine Seitenansicht der Gießvorrichtung, teilweise im Schnitt;

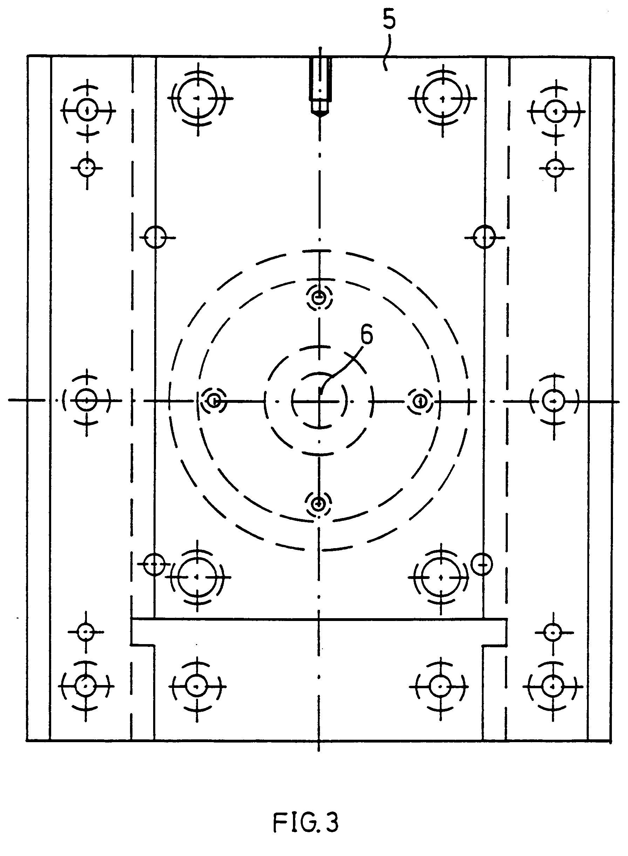

- Fig. 3: eine Seitenansicht der Gießvorrichtung in Gießrichtung gesehen;

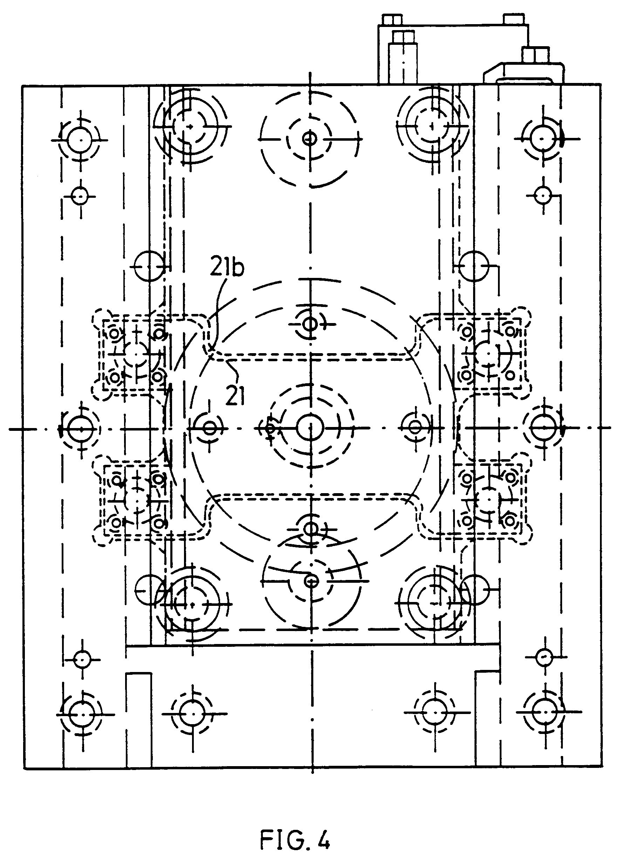

- Fig. 4: eine Seitenansicht der Gießvorrichtung gegen die Gießrichtung gesehen;
- Fig. 5: perspektivisch die Vorderseite der Kassettenaufnahme an der Bearbeitungsstation;
- Fig. 6 u. 7: zwei Ausführungsformen von Adaptern;
- Fig. 8: eine Kassettenaufnahme Adapter mit Zentrier- und Spannhilfe.

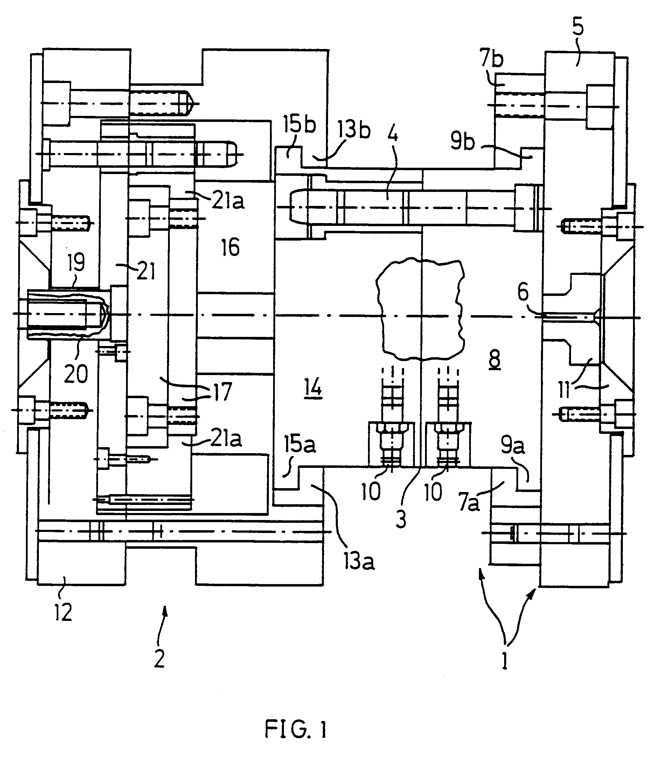

In Fig. 1 sind die beiden Formhälften in ihrer Gesamtheit jeweils mit den Bezugszeichen 1 und 2 bezeichnet. Die beiden Formhälften 1 und 2 sind im Bereich der Trennflächen 3 voneinander trennbar und senkrecht zu dieser Trennfläche durch Führungen aneinander geführt.

Die in Fig. 1 rechte Formhälfte weist eine Aufspannplatte 5 auf, in deren Mitte sich eine Einfüllöffnung 6 der Gießform befindet. An ihrer in Fig. 1 linken Seite ist die Aufspannplatte 5 mit im Querschnitt L-förmigen Zwangsführungen 7a und 7b versehen, die gemeinsam eine Kassettenaufnahme 7 bilden. In diese Kassettenaufnahme 7 ist eine Kassette 8 eingeschoben, die an ihrer der Trennfläche 3 abgewandten Seite eine T-Führung 9a, 9b aufweist, die in ihren Abmessungen an die Zwangsführungsschienen 7a und 7b der Kassettenaufnahme 7 angepaßt ist und diese hintergreift. Die Kassette 8 ist an ihrer der Trennfläche 3 abgewandten Seite großflächig an der Aufspannplatte abgestützt und seitlich mit Kühlkanälen versehen. Die Einfüllöffnung 6 ist in der Aufspannplatte 5 von einem beheizten Düsenkörper 11 umgeben. Die Einfüllöffnung 6 der Gießform und die zugehörige Kassette weisen eine in der Zeichnung nicht näher dargestellte Düse auf, die in der Abstützebene zwischen Kassette und Aufspannplatte geteilt ist. Die Teile der Düse liegen bei geschlossener Form in der Teilungsfläche dichtend aneinander an. Bei geöffneter Form kann die Kassette 8 demgegenüber ungehindert von dieser Düse aus der Kassettenaufnahme 7 herausgezogen werden.

Die in Fig. 1 linke Formhälfte weist eine Aufspannplatte 12 auf, an deren in Fig. 1 rechter Seite im Querschnitt L-förmige Zwangsführungsschienen 13a und 13b befestigt sind, die gemeinsam eine Kassettenaufnahme 13 bilden. In diese Kassettenaufnahme 13 ist eine Kassette 14 eingeschoben, die an ihrer der Trennfläche 3 abgewandten Seite eine T-Führung 14a, 14b aufweist, die in ihren Abmessungen an die Zwangsführungsschiene 13a und 13b der Kassettenaufnahme 13 angepaßt ist und diese hintergreift.

Zwischen der Kassettenaufnahme 13 und der Aufspannplatte 12 befindet sich ein Aufnahmeraum 16, in welchem ein Auswerferpaket 17 angeordnet ist. Das Auswerferpaket 17 ist an Säulen 18 gehalten, geführt und abgestützt, die an der Kassette 14 befestigt sind und sich durch den Aufnahmeraum 16 erstrecken. Zum Verschieben des Auswerferpaketes 17 dient eine in der Zeichnung nicht dargestellte Schub- und Druckstange, die durch eine Öffnung 19 in der Aufspannplatte 12 hindurchgreift und über eine Schraubbuchse 20 mit einer Krallenplatte 21 verbunden ist. Die Krallenplatte 21 ist seitlich mit Krallen 21a versehen, die das Auswerferpaket 17 an dessen Rändern hinterfassen und hinter die das Auswerferpaket 17 parallel zur zugehörigen Kassette 14 einschiebbar ist. Die Krallenplatte 21 hat im Bereich der Säulen 18 an den Seiten wellenförmige Einformungen 21b und ist in eine passende Ausnehmung der Aufspannplatte 12 derart versenkbar, daß das Auswerferpaket 17 bei geschlossener Form großflächig an der Aufspannplatte 12 und der in dieser versenkten Krallenplatte 21 abgestützt ist. Diese großflächige Abstützung macht es möglich, die bei geschlossener Form auf die Kassette 14 und das daran großflächig anliegende Auswerferpaket 17 einwirkenden Kräfte großflächig abzustützen.

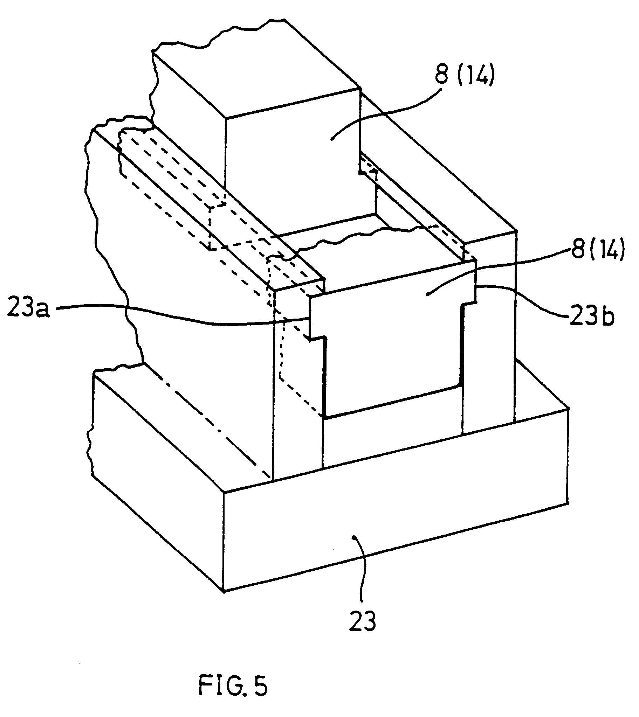

Die Fig. 5 zeigt in perspektivischer Ansicht eine Aufspannvorrichtung, die zum Aufspannen von Kassetten 8 (14) auf dem Bearbeitungstisch einer nicht dargestellten Bearbeitungsstation zeigt. Wie aus Fig. 5 ersichtlich ist, hat die Aufspannvorrichtung Zwangsführungen 23a und 23b, die gemeinsam eine Kassettenaufnahme 23 bilden. In Fig. 5 ist außerdem veranschaulicht, wie die Kassette 8 (14) in der Aufspannvorrichtung in unterschiedlichen Positionen um 180° gegeneinander verdreht festgelegt werden können.

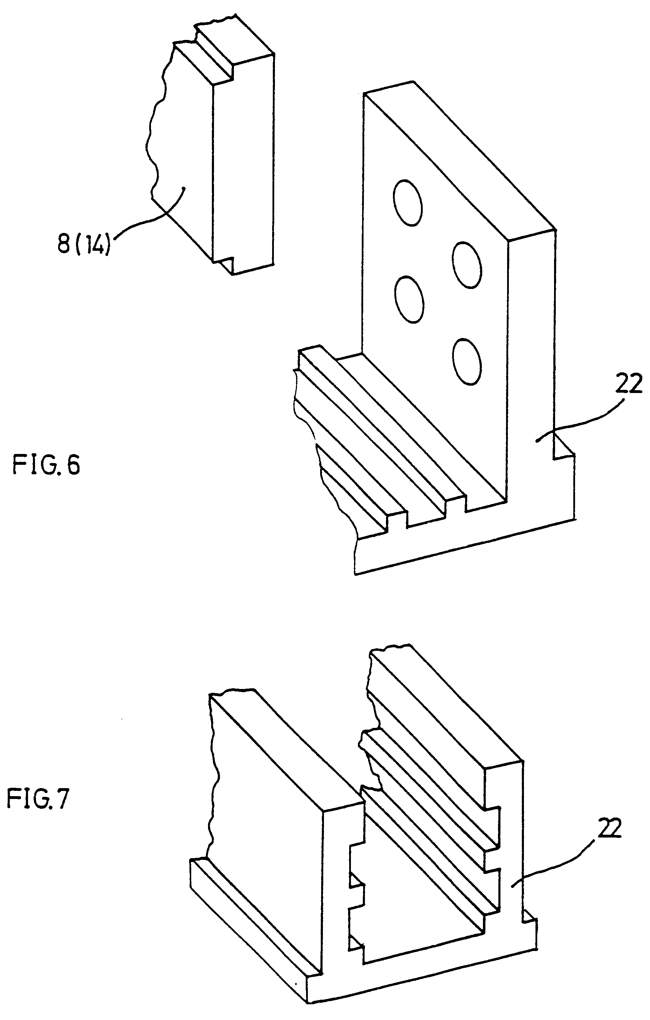

Die Fig. 6 und 7 zeigen Ausführungsformen von Adaptern 22, die es ermöglichen, die Kassetten 8 (14) in anderen Positionen in der Aufspannvorrichtung zu fixieren und zu bearbeiten.

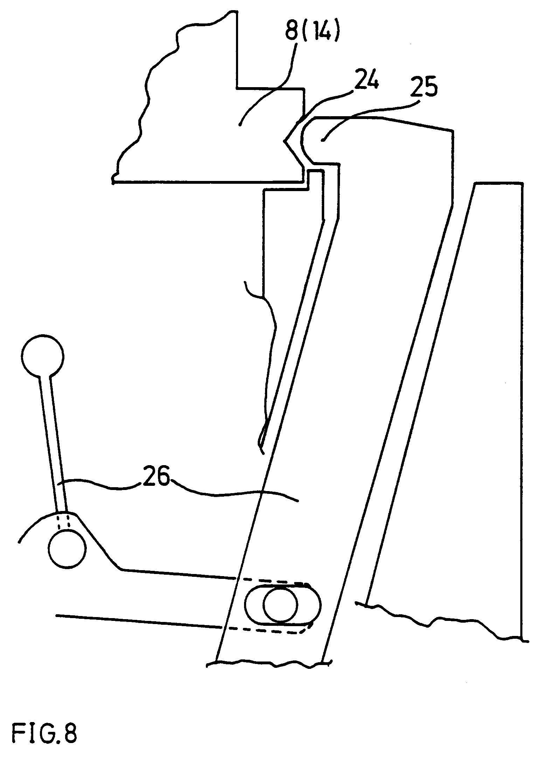

Die Fig. 8 zeigt schließlich eine Ausführungsform der Aufspannvorrichtung, die mit einer zusätzlichen Spann- und Zentriereinrichtung versehen ist. Hierzu ist die Kassette 8 (14) im Bereich der T-Führung mit V-Nuten 24 versehen, in die von der Seite her Klauen oder Leisten 25 einschiebbar sind. Diese Klauen oder Leisten 25 werden durch ein Hebelgestänge 26 gleichmäßig von beiden Seiten her in die V-Nuten 24 der Kassetten 8 (14) eingepreßt und zentrieren die Kassette in der jeweils richtigen Bearbeitungsposition.

## Patentansprüche

1. Handhabungssystem für die Handhabung von Gießformen bei der Herstellung der Formhohlräume und beim Gießen, insbesondere für den Spritz- oder Druckguß, bestehend aus mindestens einer Bearbeitungsstation mit einer Aufspannvorrichtung für die Gießform im Arbeitsbereich eines Bearbeitungswerkzeuges und mindestens einer Gießvorrichtung, wobei die Gießform zwei gegeneinander bewegliche Formhälften aufweist, die in der Gießvorrichtung senkrecht zur Trennfläche der Gießformen aneinander geführt sind, wobei einer Formhälfte (2) ein Auswerferpaket (17) zugeordnet ist, welches relativ zu dieser Formhälfte beweglich ist und an dieser Formhälfte geführt ist und wobei die Formhälften (1, 2) auswechselbare, bei geschlossener Form aneinander anliegende und den Formhohlraum umschließende Kassetten (8, 14) aufweisen, die an ihren der Trennfläche (3) abgewandten Seiten mit Zwangsführungen (9a, 9b; 15a, 15b) versehen sind, die in entsprechende Zwangsführungen (7a, 7b; 13a, 13b) der Formhälften (1, 2) einschiebbar sind, **dadurch gekennzeichnet,** daß die Aufspannvorrichtung an der Bearbeitungsstation Kassettenaufnahmen (23) mit Zwangsführungen (23a, 23b) aufweisen, die mit den Zwangsführungen (9a, 9b; 15a, 15b) der Kassetten (8, 14) korrespondieren.

2. Handhabungssystem nach Anspruch 1, dadurch gekennzeichnet, daß die Kassetten (8, 14) in der Kassettenaufnahme (23) der Bearbeitungsstation durch entsprechend ausgebildete Adapter (22) in unterschiedlichen Lagen in Bezug auf die Bearbeitungsstation fixierbar sind.

3. Handhabungssystem nach den Ansprüchen 1 und 2, dadurch gekennzeichnet, daß die Kassettenaufnahme (23) der Bearbeitungsstation mit einer Zentrier- und Spannhilfe versehen ist, durch welche die Kassetten (8, 14) oder die Adapter (22) in Bezug auf den Bearbeitungstisch der Bearbeitungsstation zentrierbar sind.

4. Handhabungssystem nach Anspruch 3, dadurch gekennzeichnet, daß die Zentrier- und Spannhilfe aus beweglichen Klauen oder Leisten (25) bestehen, die in V-förmige Ausnehmungen (24) in den Stützflächen der Kassetten (8, 14) oder der Adapter (22) einschiebbar sind, wobei die Klauen oder Leisten (25) durch einen gemeinsamen Antrieb synchron in die V-förmigen Ausnehmungen (24) der Kassette (8, 14) oder des Adapters (22) einpreßbar sind.

5. Handhabungssystem nach Anspruch 4, dadurch gekennzeichnet, daß der gemeinsame Antrieb als Hebelgetriebe (26) ausgebildet ist.

6. Gießvorrichtung, insbesondere zur Verwendung in einem Handhabungssystem nach einem oder mehreren der Ansprüche 1 bis 5, deren Gießform zwei gegeneinander bewegliche Formhälften (1, 2) aufweist, die in der Gießvorrichtung senkrecht zur Trennfläche der Gießform aneinander geführt sind, wobei einer Formhälfte (2) ein Auswerferpaket (17) zugeordnet ist, welches relativ zu dieser Formhälfte (2) beweglich ist und an dieser Formhälfte (2) geführt ist, und wobei die Formhälften (1, 2) auswechselbare, bei geschlossener Gießform aneinander anliegende und den Formhohlraum umschließende Kassetten (8, 14) aufweisen, die an ihren den Trennflächen (3) abgewandten Seiten mit Stützflächen und Zwangsführungen (9a, 9b; 15a, 15b) versehen sind, die in entsprechende Zwangsführungen (7a, 7b; 13a, 13b) der Formhälften (1, 2) einschiebbar sind, dadurch gekennzeichnet, daß die mit dem Auswerferpaket (17) versehene Formhälfte (2) einen Aufnahmeraum (16) für das Auswerferpaket (17) aufweist, welches an Führungssäulen (18) gehalten, geführt und gestützt ist, die an der zugehörigen Kassette (14) befestigt sind und sich durch den Aufnahmeraum (16) erstrecken.

7. Gießvorrichtung nach Anspruch 6, dadurch gekennzeichnet, daß dem Auswerferpaket (17) eine von einer Zug- und Druckstange betätigte, das Auswerferpaket hinterfassende Krallenplatte (21) zugeordnet ist, hinter deren Krallen (21a) das Auswerferpaket parallel zur zugehörigen Kassette (14) einschiebbar ist.

8. Gießvorrichtung nach Anspruch 7, dadurch gekennzeichnet, daß die Krallenplatte (21) bei geschlossener Form bündig in eine passende Ausnehmung der zugehörigen Aufspannplatte (12) versenkt ist.

9. Gießvorrichtung nach den Ansprüchen 6 bis 8, dadurch gekennzeichnet, daß die Krallenplatte (21) am Rand im Bereich der Führungssäulen (18) wellenförmige Ausnehmungen (21b) aufweist.

10. Gießvorrichtung nach Anspruch 6, dadurch gekennzeichnet, daß die Einfüllöffnung (6) der Gießform und die zugehörigen Kassette (8) eine Düse aufweisen, die in der Abstützebene zwischen Kassette (8) und Aufspannplatte (5) geteilt ist.

## Claims

1. A handling system for handling casting moulds in production of the mould cavities and in the casting operation, in particular for injection moulding or die casting, comprising at least one processing station having a clamping apparatus for the mould in the working region of a processing tool and at least one casting apparatus, wherein the mould has two mould halves which are movable relative to each other and which are guided together in the casting apparatus perpendicularly to the separation surface of the moulds, wherein associated with a mould half (2) is an ejector assembly (17) which is cable relative to said mould half and which is guided on said mould half and wherein the mould halves (1, 2) have replaceable cassettes (8, 14) which bear against each other when the mould is closed and which enclose the mould cavity and which at their sides remote from the separation surface (3) are provided with positive guides (9a, 9b; 15a, 15b) which can be inserted into corresponding positive guides (7a, 7b; 13a, 13b) of the mould halves (1, 2), characterised in that the clamping apparatus at the processing station has cassette receiving means (23) with positive guides (23a, 23b) which correspond to the positive guides (9a, 9b; 15a, 15b) of the cassettes (8, 14).

2. A handling system according to claim 1 characterised in that the cassettes (8, 14) can be fixed in the cassette receiving means (23) of the processing station by adaptors (22) of a suitable configuration in different positions with respect to the processing station.

3. A handling system according to claims 1 and 2 characterised in that the cassette receiving means (23) of the processing station is provided with a centering and clamping means by which the cassettes (8, 14) or the adaptors (22) can be centred with respect to the processing table of the processing station.

4. A handling system according to claim 3 characterised in that the centering and clamping means comprise movable claws or bars (25) which can be inserted into V-shaped openings (24) in the support surfaces of the cassettes (8, 14) or the adaptors (22), wherein the claws or bars (25) can be synchronously pressed by a common drive into the V-shaped openings (24) of the cassette (8, 14) or the adaptor (22).

5. A handling system according to claim 4 characterised in that the common drive is in the form of a lever transmission arrangement (26).

6. A casing apparatus, in particular for use in a handling system according to one or more of claim 1 to 5, whose mould has two mould halves (1, 2) which are movable relative to each other and which are guided together in the casting apparatus perpendicularly to the separation surface of the mould, wherein associated with a mould half (2) is an ejector assembly (17) which is cable relative to said mould half (2) and which is guided on said mould half (2) and wherein the mould halves (1, 2) have replaceable cassettes (8, 14) which bear against each other when the mould is closed and which enclose the mould cavity and which at their sides remote from the separation surface (3) are provided with support surfaces and positive guides (9a, 9b; 15a, 15b) which can be inserted into corresponding positive guides (7a, 7b; 13a, 13b) of the mould halves (1, 2), characterised in that the mould half (2) provided with the ejector assembly (17) has a receiving space (16) for the ejector assembly (17) which is held, guided and supported on guide columns (18) which are fixed to the associated cassette (14) and extend through the receiving space (16).

7. A casting apparatus according to claim 6 characterised in that associated with the ejector assembly (17) is a claw plate (21) which is actuated by a pulling and pushing bar and which engages behind the ejector assembly and behind the claws (21a) of which the ejector assembly can be inserted in parallel relationship with the associated cassette (14).

8. A casting apparatus according to claim 7 characterised in that when the mould is closed the claw plate (21) is sunk in flush relationship in a suitable opening in the associated clamping plate (12).

9. A casting apparatus according to claims 6 to 8 characterised in that the claw plate (21) has wave-shaped openings (21b) at the edge in the region of the guide columns (18).

10. A casting apparatus according to claim 6 characterised in that the filling opening (6) of the mould and the associated cassette (8) have a nozzle which is divided in the support plane between the cassette (8) and the clamping plate (5).

## Revendications

1. Système de manipulation pour la manipulation de moules lors de la fabrication des espaces creux de moule et lors du moulage, notamment pour le moulage par injection ou sous pression, constitué d'au moins une station de traitement avec un dispositif de fixation pour le moule dans la zone de travail d'un outil d'usinage et au moins un dispositif de coulée, le moule présentant deux moitiés de moule déplaçables l'une vers l'autre qui sont guidées l'une à côté de l'autre dans le dispositif de coulée perpendiculairement à la face de séparation des moules, à une moitié de moule étant associé un paquet éjecteur (17) qui est déplaçable relativement à cette moitié de moule et qui est guidé à cette moitié de moule, et les moitiés de moule (1, 2) présentant des cassettes échangeables (8, 14) contiguës lorsque le moule est fermé et entourant l'espace creux de moule qui sont pourvues à leurs côtés éloignés de la face de séparation (3) de guidages forcés (9a, 9b ; 15a, 15b) qui peuvent être poussés dans des guidages forcés correspondants (7a, 7b ; 13a, 13b) des moitiés de moule (1, 2), caractérisé en ce que le dispositif de fixation présente à la station de traitement des logements à cassette (23) avec des guidages forcés (23a, 23b) qui correspondent aux guidages forcés (9a, 9b ; 15a, 15b) des cassettes (8, 14).

2. Système de manipulation selon la revendication 1, caractérisé en ce que les cassettes (8, 14) peuvent être fixées dans le logement à cassette (23) de la station de traitement par des adaptateurs (22) réalisés de façon correspondante dans des positions différentes relativement à la station de traitement.

3. Système de manipulation selon les revendications 1 et 2, caractérisé en ce que le logement à cassettes (23) de la station de traitement est pourvu d'une aide de centrage et de fixation par laquelle les cassettes (8, 14) ou les adaptateurs (22) peuvent être centrés relativement à la table d'usinage de la station de traitement.

4. Système de manipulation selon la revendication 3, caractérisé en ce que l'aide au centrage et à la fixation est constituée de griffes ou baguettes mobiles (25) qui peuvent être poussées dans des évidements en forme de V (24) dans les faces d'appui des cassettes (8, 14) ou des adaptateurs (22), les griffes ou baguettes (25) pouvant être enfoncées par une commande commune de manière synchrone dans les évidements en forme de V (24) de la cassette (8, 14) ou de l'adaptateur (22).

5. Système de manipulation selon la revendication 4, caractérisé en ce que la commande commune est réalisée sous forme de mécanisme de transmission à levier (26).

6. Dispositif de coulée, notamment pour l'utilisation dans un système de manipulation selon une ou plusieurs des revendications 1 à 5, dont le moule présente deux moitiés de moule (1, 2) déplaçables l'une contre l'autre qui sont guidées l'une à côté de l'autre dans le dispositif de coulée perpendiculairement à la face de séparation du moule, à une moitié de moule (2) étant associé un paquet éjecteur (17) qui est déplaçable relativement à cette moitié de moule (2) et guidé à cette moitié de moule (2), et les moitiés de moule (1, 2) présentant des cassettes échangeables (8, 14) qui sont contiguës lorsque le moule est fermé et qui entourent l'espace creux de moule, qui sont pourvues à leurs côtés éloignés des faces de séparation (3) de surfaces d'appui et de guidages forcés (9a, 9b ; 15a, 15b) qui peuvent être poussés dans des guidages forcés correspondants (7a, 7b ; 13a, 13b) des moitiés de moule (1, 2), caractérisé en ce que la moitié de moule (2) pourvue du paquet éjecteur (17) présente un espace de réception (16) du paquet éjecteur (17) et qui est retenu, guidé et supporté à des colonnes de guidage (18) qui sont fixées à la cassette associée (14) et qui s'étendent à travers l'espace de réception (16).

7. Dispositif de coulée selon la revendication 6, caractérisé en ce qu'il est associé au paquet éjecteur (17) une plaque à griffes (23) actionnée par une tige de traction et de pression, passant derrière le paquet éjecteur, derrière les griffes (21a) de celle-ci le paquet éjecteur peut être inséré parallèlement à la cassette associée (14).

8. Dispositif de coulée selon la revendication 7, caractérisé en ce que la plaque à griffe (21), lorsque le moule est fermé, est noyée en affleurement dans un évidement correspondant dans la plaque de fixation associée (12).

9. Dispositif de coulée selon les revendications 6 à 8, caractérisé en ce que la plaque à griffe (21) présente au bord, au voisinage des colonnes de guidage (18), des évidements en forme d'onde (21b).

10. Dispositif de coulée selon la revendication 6, caractérisé en ce que l'ouverture de remplissage (6) du moule et la cassette associée (8) présentent une tuyère qui est divisée dans le plan d'appui entre la cassette (8) et la plaque de fixation (5).
